Europäisches Patentamt

European Patent Office

Office européen des brevets

(11) Veröffentlichungsnummer: **0 092 217**
**B1**

(12) # EUROPÄISCHE PATENTSCHRIFT

(45) Veröffentlichungstag der Patentschrift:
24.09.86

(21) Anmeldenummer: 83103734.6

(22) Anmeldetag: 18.04.83

(51) Int. Cl.⁴: **G 02 B 6/36**, G 02 B 6/42

(54) **Lichtwellenleitersteckvorrichtung insbesondere für die Einschubtechnik.**

(30) Priorität: 21.04.82 DE 8211442 U

(43) Veröffentlichungstag der Anmeldung:
26.10.83 Patentblatt 83/43

(45) Bekanntmachung des Hinweises auf die Patenterteilung:
24.09.86 Patentblatt 86/39

(84) Benannte Vertragsstaaten:
CH DE FR GB LI

(56) Entgegenhaltungen:
DE-U-7 513 076
DE-U-7 519 901
DE-U-7 808 002
US-A-4 285 572

(73) Patentinhaber: Siemens Aktiengesellschaft Berlin und München, Wittelsbacherplatz 2, D-8000 München 2 (DE)

(72) Erfinder: Schön, Josef, Dipl.- Ing., Hans- Thonauer-Strasse 35, D-8000 München 21 (DE)

**Beschreibung**

Die Erfindung bezieht sich auf eine Lichtwellenleiter-Steckvorrichtung entsprechend dem Obergriff des Anspruches 1.

Eine solche Lichtwellenleiterstreckvorrichtung ist aus der US-A-4 285 572 bekannt. Eine solche Steckvorrichtung ermöglicht es, einen z.B. gestellseitig ankommenden Lichtwellenleiter unmittelbar an eine Sende-bzw. Empfangsdiode anzuschließen, die auf einer einschubseitigen Leiterplatte befindet. Diese bekannte Lichtwellenleitersteckvorrichtung ist jedoch nur zum Anschluß eines Lichtwellenleiters an ein opto-elektrisches Bauelement geeignet. Aufgabe vorliegender Erfindung ist es, eine Lichtwellenleitersteckvorrichtung der eingans genannten Art so weiterzubilden, daß der eine Teil der Steckvorrichtung möglichst unkompliziert einerseits zur Aufnahme eines elektrooptischen Elementes und anderseits zur Aufnahme eines weiteren Lichtwellenleiterendabschnittes umgerüstet werden kann, und daß in jedem dieser Einsatzfälle optimale Steckbedinungen vorhanden sind.

Erfindungsgemäß ergibt sich die Lösung dieser Aufgabe dadurch, daß der Führungsabschnitt mit einer auf die Öffnung des Stopprings abgestimmten ringförmigen Schulter versehen ist, und daß sowohl ein erster Hauptkörper vorgesehen ist, der als Lichtwellenleiterführungselement ausgebildet ist und bei dessen Verbindung mit dem Führungskörper der Stoppring entfernt wird, als auch ein mit dem ersten Hauptkörper austauschbarer zweiter Hauptkörper, der als Sockelkörper für ein elektrooptisches Bauelement ausgebildet ist, und bei dessen verbindung mit dem Führungskörper der Stoppring eingefügt wird.

Durch die wahlweise Einfügung des Stoppringes und die stirnseitige Ausbildung des Lichtwellenleiterführungselementes des stiftseitigen Teils der Steckvorrichtung mit einer ringförmigen Schulter wird erreicht, daß bei Bestückung des buchsenseitigen Teils der Steckvorrichtung mit einem als Diodensockel ausgebildeten Hauptkörper zwischen der am Diodensockel befestigten LED und der Stirnseite des Lichtwellenleiterführungselementes des stiftseitigen Teils der Steckvorrichtung ein Mindestabstand verbleibt, der eine Beschädigung der Diode durch das Lichtwellenleiterführungselement des stiftseitigen Teils sicher ausschließt. Wird dagegen der Hauptkörper des buchsenseitigen Teils der Steckvorrichtung als Lichtwellenleiterführungselement ausgebildet, und der Stoppring weggelassen, so kann das Lichtwellenleiterführungselement des stiftseitigen Teils der Steckvorrichtung sich mit seiner, dem buchsenseitigen Teil der Steckvorrichtung zugewandten Stirnseite gegen die entsprechende Stirnseite des buchsenseitigen Lichtwellenleiterführungselementes legen, wodurch auch die beiden Stirnflächen der in den beiden Teilen der Lichtwellenleitersteckvorrichtung fixierten Lichtwellenleiterendabschnitte im wesentlichen spaltfrei aneinanderliegen.

Weitere Ausgestaltungen der Erfindung sehen vor, daß der hülsenartige Führungskörper mit einem vom stiftseitigen Teil abgewandten Gewindeansatz auf den Hauptkörper aufschraubbar ausgebildet ist, daß ein den Führungsabschnitt bildendes zylindrisches Lichtwellenleiterführungselement des stiftseitigen Teils in einer Außenhülse in Steckrichtung verschiebbar gelagert ist, daß das Lichtwellenleiterführungselement mit einem quer zur Steckrichtung vorgesehenen Bund an einem Anschlag der Außenhülse in Steckrichtung abgestützt ist, daß zwischen dem Bund und einer Endfläche der Außenhülse eine das Lichtwellenleiterführungselement des stiftseitigen Teils umgebende Schraubendruckfeder abgestützt ist, daß die Endfläche durch eine in die Außenhülse einschraubbare Ringmutter gebildet ist, daß die Ringmutter eine kleinere lichte Weite aufweist als der Aussendurchmesser des Bundes des Lichtwellenleiterführungselementes des stiftförmigen Teils, daß das Lichtwellenleiterführungselement des stiftseitigen Teils im Bereich der Aussenhülse mit einer Endhülse verschraubt ist, daß die Endhülse einen mit einem gegenüber der lichten Weite der Ringmutter größeren Außendurchmesser versehenen, und außerhalb der Außenhülse vorgesehenen Ringbund aufweist, daß die Endhülse auf der vom buchsenseitigen Teil abgewandten Seite des Ringbundes als Crimphülse ausgebildet ist, daß eine in den Bereich der Crimphülse einschiebbare Gegenhülse vorgesehen ist, und daß die Außenhülse an ihrem, dem buchsenseitigen Teil zugewandten Ende gegenüber dem Führungsabschnitt einen Abstand zur Bildung eines Aufnahmespaltes für einen Endbereich des Führungskörpers aufweist.

Durch diese Ausbildung der Lichtwellenleitersteck-vorrichtung wird das Einfügen des Stoppringes wesentlich vereinfacht und der Zusammenbau des stiftförmigen Teils der Steckvorrichtung, sowie der Anschluß eines Lichtwellenleiterkabels an diesen Teil der Steckvorrichtung wesentlich erleichtert.

Nachstehend werden Ausführungsbeispiele der Erfindung anhand von drei Figuren noch näher erläutert.

Dabei zeigen

Fig. 1 in Seitenansicht und geschnitten dargestellt, den stiftseitigen Teil der Lichtwellenleitersteckvorrichtung,

Fig. 2 in Seitenansicht und geschnitten dargestellt, den buchsenseitigen Teil der Lichtwellenleitersteckvorrichtung, wobei der Hauptkörper des buchsenseitigen Teils als Lichtwellenleiterführungselement ausgebildet ist, und

Fig. 3 in Seitenansicht und geschnitten dargestellt, den buchsenseitigen Teil einer Lichtwellenleitersteckvorrichtung, bei dem der Hauptkörper als Sockelkörper einer LED ausgebildet ist.

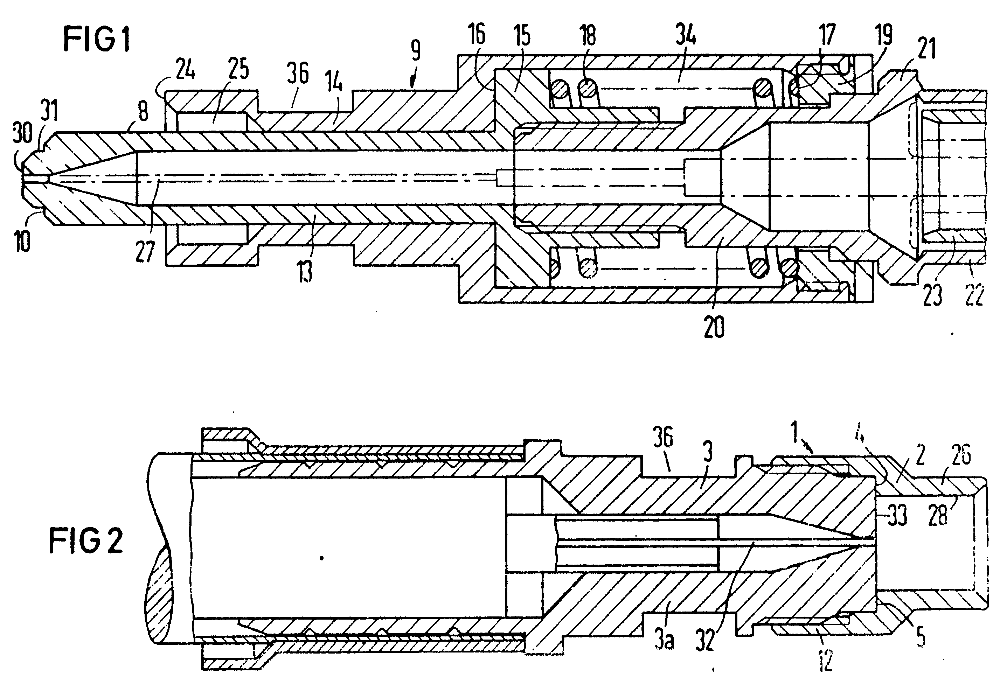

Bei der in den Figuren dargestellten Lichtwellenleitersteckvorrichtung handelt es sich um eine vorzugsweise in der Einschubtechnik verwendete Steckvorrichtung. Deshalb ist bei dem in Fig. 1 dargestellten stiftseitigen Teil 9 der Steckvorrichtung das zylindrische Lichtwellenleiterführungselement 13 in Steckrichtung federnd in einer Aussenhülse 14 gelagert. Trifft nämlich das Lichtwellenleiterführungselement 13, das z.B. gestellseitig vorgesehen ist, beim Zusammenfügen der beiden Teile der Lichtwellenleitersteckvorrichtung auf den z.B. ebenfalls als Lichtwellenleiterführungselement 3a ausgebildeten Hauptkörper 3 des buchsenseitigen Teils 1 der Steckvorrichtung (Fig. 2), der z.B. einschubseitig angeordnet ist, dann kann das Lichtwellenleiterführungselement 13 elastisch bei einer weiteren Vorwärtsbewegung des Einschubs und damit des buchsenseitigen Teils 1 der Lichtwellenleitersteckvorrichtung zurückweichen.

Beim Zusammenfügen der beiden Teile 1, 9 der Lichtwellenleitersteckvorrichtung dringt das zylindrische Lichtwellenleiterführungselement 13, das in einer zu seinem Mantel koaxialen Bohrung einen Glasfaser-Lichtwellenleiter 27 enthält, mit einem Führungsabschnitt 8 in den hohlzylindrisch ausgebildeten Aufnahmeraum 28 eines hülsenartigen Führungskörpers 2 ein, der mit einem vom stiftseitigen Teil 9 abgewandten Gewindeansatz 12 auf einen im wesentlichen zylindrischen Hauptkörper 3 des buchsenseitigen Teils 1 der Steckvorrichtung aufgeschraubt ist.

Der Hauptkörper 3 des buchsenseitigen Teils 1 der Steckvorrichtung kann entweder als Sockel (3b) für ein elektrooptisches Bauelement 11 oder ebenfalls als ein Lichtwellenleiterführungselement (3a) ausgebildet sein.

Ist der Hauptkörper 3 als Bauelementsockel 3b ausgebildet, so trägt er an seiner Stirnseite 29, die dem stiftseitigen Teil 9 der Steckvorrichtung zugewandt ist, das elektrooptische Bauelement, z.B. eine lichtemittierende Diode 11. Die Diode 11 ist an dem Sockel 3 so befestigt, daß ihre optisch aktive Fläche genau auf die Achse des Aufnahmeraumes 28 des Führungskörpers 2 ausgerichtet ist. Beim Zusammenfügen der beiden Teile 1, 9 der Lichtwellenleitersteckvorrichtung wird daher die Glasfaser 27 automatisch auf die optisch aktive Fläche der LED 11 ausgerichtet. Dabei darf jedoch das Lichtwellenleiterführungselement 13 keinesfalls an der Diode 11 anstoßen.

Um dies zu verhindern, ist ein Stoppring 6 vorgesehen, der so ausgebildet ist, daß er zwischen Klemmflächen 4, 5 von Hauptkörper 3 und Führungskörper 2 eingefügt und beim Verschrauben dieser beiden Teile miteinander zwischen diesen Flächen eingeklemmt werden kann.

Die Stirnseite 30 des Lichtwellenleiterführungselementes 13 des stiftseitigen Teils 9 ist mit einer ringförmigen Schulter 10 versehen, wodurch ein im Durchmesser gegenüber dem Führungsabschnitt 8 des Lichtwellenleiterführungselementes 13 verminderter Teil 31 am Lichtwellenleiterführungselement 13 gebildet wird, der in die zentrale Öffnung 7 des Stopprings 6 paßt. Die Stirnseite des Lichtwellenleiters 27 wird auf diese Weise geführt bis in die nächste Nähe der optisch aktiven Fläche der LED 11 gebracht. Die Ringschulter 10 legt sich dabei gegen den Stoppring 6 und sichert dadurch einen Mindestabstand zwischen dem Lichtwellenleiterführungselement 13 und der LED 11.

Ist dagegen der Hauptkörper 3 ebenfalls als Lichtwellenleiterführungselement 3a ausgebildet, in dem ein Lichtwellenleiter 32 entsprechend dem Lichtwellenleiter 27 im Lichtwellenleiterführungselement 13 angeordnet ist, dann wird beim Zusammenfügen von Führungskörper 2 und Hauptkörper 3 der Stoppring weggelassen. Dadurch kann sich die Stirnseite 30 des Lichtwellenleiterführungselementes 13 und damit die mit dieser Stirnseite fluchtende, Stirnseite des Lichtwellenleiters 27 gegen die Stirnseite 33 des ebenfalls als Lichtwellenleiterführungselement 3a ausgebildeten Hauptkörpers 3 des buchsenseitigen Teils der Steckvorrichtung 1 legen. Da der Lichtwellenleiter 32 mit seiner Stirnseite ebenfalls mit der Stirnseite 33 fluchtet, liegen dadurch die Stirnseiten der beiden Lichtwellenleiter 27 und 32 im wesentlichen spaltfrei aneinander.

Das spielfreie Aneinanderliegen der Stirnseiten 30 und 33 wird zusätzlich durch eine Schraubendruckfeder 18 sichergestellt, die in einer Kammer 34 der Außenhülse 14 angeordnet ist, und das Lichtwellenleiterführungselement 13 umgibt. Die Feder 18 stützt sich einerseits an einem quer zur Steckrichtung vorgesehenen Bund 15 des Lichtwellenleiterführungselementes 13 und andererseits an einer Ringmutter 19 ab, die die Kammer 34 auf der vom Teil 1 abgewandten Seite der Aussenhülse 14 verschließt und mit dieser verbunden ist.

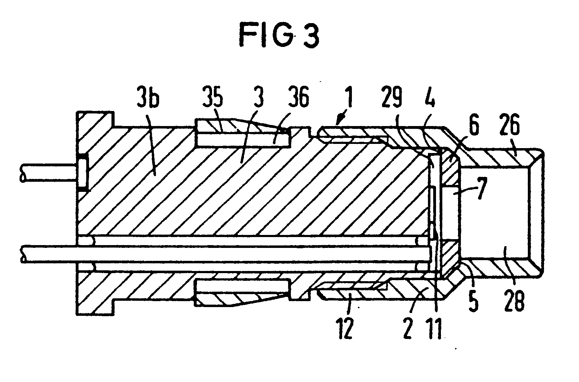

In der vordersten Position des Lichtwellenleiterführungselementes 13 stützt sich der Bund 15 an einem Anschlag 16 der Außenhülse 14 ab. Die Außenhülse 14 selbst ist mit Hilfe eines Rastringes 35 (vgl. hierzu Fig. 3), der in einer Eindrehung 36 der Außenhülse 14 sitzt (in Fig. 1 ist dieser Rastring nicht dargestellt), z.B. in dem Kunststoffgehäuse einer gestellseitigen Steckerleiste fixiert.

Das Lichtwellenleiterführungselement 13 ist im Bereich der Kammer 34 mit einer Endhülse 20 verschraubt, die außerhalb dér Außenhülse 14 mit einem Bund 21 versehen ist, dessen Außendurchmesser größer ist, als die lichte Weite der Ringmutter 19. Auf diese Weise kann die Ringmutter 19 nicht verlorengehen, da sie bei einer Demontage zwischen der Feder 18 und dem Bund 21 gehalten wird.

Die Endhülse 20 geht auf der vom Teil 1 abgewandten Seite des Bundes 21 in eine Crimphülse 22 über, wobei ein den · Lichtwellenleiter 27 umgebender Außenmantel mit einem über eine Gegenhülse 23 zurückgeschobenen Abschnitt zwischen der Crimphülse 22 und der Gegenhülse 23 eingeklemmt werden kann. Am Lichtwellenleiterkabel auftretende Zugkräfte werden dadurch sicher abgefangen.

An ihrem, dem Teil 1 zugewandten Ende 24 bildet die Außenhülse 14 einen ringförmigen Aufnahmespalt 25 für einen Endbereich 26 des Führungskörpers 2, wodurch eine zusätzliche Versteifung der Steckvorrichtung gegenüber Kräften, die die beiden Teile 1, 9 der Steckvorrichtung gegeneinander abwinkeln wollen, erreicht wird.

## Bezugszeichenliste

1 buchsenseitiges Teil
2 Führungskörper
3 Hauptkörper
3a Lichtwellenleiterführungselement
3b Diodensockel
4,5 Klemmflächen von 3 und 2
6 Stoppring
7 zentrale Öffnung von 6
8 Führungsabschnitt von 13
9 stiftseitiges Teil
10 ringförmige Schulter von 13
11 elektrooptisches Element
12 Gewindeansatz von 2
13 Lichtwellenleiterführungselement
14 Außenhülse
15 Bund von 13
16 Anschlag von 14
17 Endfläche von 19
18 Schraubendruckfeder
19 Ringmutter
20 Endhülse
21 Bund von 20
22 Crimphülse
23 Gegenhülse ·
24 Ende der Außenhülse
25 Aufnahmespalt
26 Endbereich von 2
27 Lichtwellenleiter
28 Aufnahmeraum von 2
29 Stirnseite von 3b
30 Stirnseite von 13
31 im Durchmesser verminderter Teil von 13
32 Lichtwellenleiter
33 Stirnseite von 3a

34 Kammer
35 Rastring
36 Eindrehung für 35

## Patentansprüche

1. Lichtwellenleitersteckvorrichtung mit einem stift- und einem buchsenseitigen Teil, bei der das stiftseitige Teil mit einem seinem freien Ende benachbarten Führungsabschnitt in einen hohlzylindrischen Führungskörper des buchsenseitigen Teils einschiebbar ist, und bei der der hohlzylindrische Führungskörper (2) mit einem Hauptkörper (3) des buchenseitigen Teils (1) unter Bildung von senkrecht zur Achse der Steckvorrichtung liegenden Klemmflächen (4, 5) zwischen Führungs- und Hauptkörper (2, 3) ¯ verbindbar und ein zwischen die Klemmflächen (4, 5) einsetzbarer Stoppring (6) vorgesehen ist, dessen Öffnung (7) im Durchmesser kleiner ist, als der Außendurchmesser des Führungsabschnittes (8) des stifteseitigen Teils (9),
dadurch gekennzeichnet,
daß der Führungsabschnitt (8) mit einer auf die Öffnung (7) des Stopprings (6) abgestimmten · ringförmigen Schulter (10) versehen ist, und daß sowohl ein erster Hauptkörper (3) vorgesehen ist, der als Lichtwellenleiterführungselement (3a) ausgebildet ist und bei dessen Verbindung mit dem Führungskörper (2) der Stoppring (6) entfernt wird, als auch ein mit dem ersten Hauptkörper austauschbarer zweiter Hauptkörper, der als Sockelkörper (3b) für ein elektrooptisches Bauelement (11) ausgebildet ist und bei desen Verbindung mit dem Führungskörper (2) der Stoppring (6) eingefügt wird.

2. Lichtwellenleitersteckvorrichtung nach Anspruch 1,
dadurch gekennzeichnet,
daß der hülsenartige Führungskörper (2) mit einem vom stiftseitigen Teil (9) abgewandten Gewindeansatz (12) auf den Hauptkörper (3) aufschraubbar ausgebildet ist.

3. Lichtwellenleitersteckvorrichtung nach einem der Ansprüche 1 oder 2,
dadurch gekennzeichnet,
daß ein den Führungsabschnitt (8) bildendes zylindrisches Lichtwellenleiterführungselement (13) des stiftseitigen Teils (9) in einer Außenhülse (14) in Steckrichtung verschiebbar gelagert ist.

4. Lichtwellenleitersteckvorrichtung nach Anspruch 3,
dadurch gekennzeichnet, daß das Lichtwellenleiterführungselement (13) mit einem quer zur Steckrichtung vorgesehenen Bund (15) an einem Anschlag (16) der Außenhülse (14) in Steckrichtung abgestützt ist.

5. Lichtwellenleitersteckvorrichtung nach Anspruch 4,
dadurch gekennzeichnet, daß zwischen dem Bund (15) und einer Endfläche (17) der

Außenhülse (14) eine das Lichtwellenleiterführungselement (13) des stiftseitigen Teils (9) umgebende Schraubendruckfeder (18) abgestützt ist.

6. Lichtwellenleitersteckvorrichtung nach Anspruch 5,
   dadurch gekennzeichnet, daß die Endfläche (17) durch eine in die Außenhülse (14) einschraubbare Ringmutter (19) gebildet ist.

7. Lichtwellenleitersteckvorrichtung nach Anspruch 6,
   dadurch gekennezeichnet, daß die Ringmutter (19) eine kleinere lichte Weite aufweist als der Außendurchmesser des Bundes (15) des Lichtwellenleiterführungselementes (13) des stiftförmigen Teils (9).

8. Lichtwellenleitersteckvorrichtung nach Anspruch 7,
   dadurch gekennzeichnet, daß das Lichtwellenleiterfürungselement (13) des stiftseitigen Teils (9) im Bereich der Außenhülse (14) mit einer Endhülse (20) verschraubt ist.

9. Lichtwellenleitersteckvorrichtung nach Anspruch 8,
   dadurch gekennzeichnet, daß die Endhülse (20) einen mit einem gegenüber der lichten Weite der Ringmutter (19) größeren Außendurchmesser versehenen, und außerhalb der Außenhülse (14) vorgesehen Ringbund (21) aufweist.

10. Lichtwellenleitersteckvorrichtung nach Anspruch 9,
   dadurch gekennzeichnet, daß die Endhülse (20) auf der vom buchsenseitigen Teil (1) abgewandten Seite des Ringbundes (21) als Crimphülse (22) ausgebildet ist.

11. Lichtwellenleitersteckvorrichtung nach Anspruch 10,
   dadurch gekennzeichnet, daß eine in den Bereich der Crimphülse (22) einschiebbare Gegenhülse (23) vorgesehen ist.

12. Lichtwellenleitersteckvorrichtung nach Anspruch 11,
   dadurch gekennzeichnet, daß die Außenhülse (14) an ihrem, dem buchsenseitigen Teil (1) zugewandten Ende (24) gegenüber dem Führungsabschinitt einen Abstand zur Bildung eines Aufnahmespaltes (25) für einen Endbereich (26) des Führungskörpers (2) aufweist.

## Claims

1. A light waveguide plug-in device with male and female components, where the male component has a guide section adjacent its free end to facilitate insertion into a hollow, cylindrical guide body of the female component, and where the hollow, cylindrical guide body (2) can be connected to a main body (3) of the female component (1) with clamping surfaces (4, 5) at right angles to the axis of the plug-in device between the guide body (2) and the main body (3), and where a stop ring (6) is provided to be inserted between the clamping surfaces (4, 5) and has an opening (7) smaller in diameter than the outer diameter of the guide section (8) of the male component (9), characterised in that the guide section (8) is provided with an annular shoulder (10) which matches the opening (7) of the stop ring (6), and that there are provided both a first main body (3) in the form of a light waveguide guide element (3a), connected to the guide body (2) when the stop ring (6) is removed, and a second main body for exchange with the first main body and forming a base body (3b) for an electro-optical component (11) connected to the guide body (2) when the stop ring (6) is inserted.

2. A light waveguide plug-in device as claimed in Claim 1, characterised in that the sleeve-like guide body (2) is such that it can be screwed onto the main body (3) by means of a threaded attachment (12) remote from the male component (9).

3. A light wavefuide plug-in device as claimed in one of Claims 1 or 2, characterised in that a cylindrical light waveguide guide element (13) forming the guide section (8) of the male component (9) is mounted in an outer sleeve (14) so as to be displaceable in the plug-in direction.

4. A light waveguide plug-in device as claimed in Claim 3, characterised in that a collar (15) extending transversely to the plug-in direction supports the light waveguide guide element (13) against a stop means (16) of the outer sleeve (14) in the plug-in direction.

5. A light waveguide plug-in device as claimed in Claim 4, characterised in that a helical pressure spring (18), surrounds the light waveguide guide element (13) of the male component (9), and is supported between the collar (15) and an end face (17) of the outer sleeve (14).

6. A light waveguide plug-in device as claimed in Claim 5, characterised in that the end face (17) is formed by an annular nut (19) which can be screwed into the outer sleeve (14).

7. A light waveguide plug-in device as claimed in Claim 6, characterised in that the annular nut (19) has a smaller internal width than the outer diameter of the collar (15) of the light waveguide guide element (13) of the male component (9).

8. A light waveguide plug-in device as claimed in Claim 7, characterised in that in the region of the outer sleeve (14) the lifht waveguide guide element (13) of the male component (9) is screwed to an end sleeve (20).

9. A light waveguide plug-in device as claimed in Claim 8, characterised in that the end sleeve (20) comprises an annular collar (21) having an outer diameter greater than the internal width of the annular nut (19) and arranged outside the outer sleeve (14).

10. A light waveguide plug-in device as claimed in Claim 9, characterised in that the end sleeve (20) represents a crimped sleeve (22) on that side of the annular collar (21) remote from the female component (1).

11. A light waveguide plug-in device as claimed in Claim 10, <u>characterised in</u> that a counter-sleeve (23) is provided which can be inserted into the region of the crimped sleeve (22).

12. A light waveguide plug-in device as claimed in Claim 11, <u>characterised in</u> that the end (24) of the outer sleeve (14) facing towards the female component (1) is spaced from the guide section to form an accommodating gap (25) for an end zone (26) of the guide body (2).


**Revendications**

1. Dispositif d'enfichage pour guides d'ondes optiques, comportant une partie située du côté formant broche et une partie située du côté formant manchon et dans lequel la partie située du côté formant broche peut être insérée, par une section de guidage voisine de son extrémité libre, dans un corps de guidage en forme de cylindre creux de la partie située du côté formant manchon, et dans lequel le corps de guidage en forme de cylindre creux (2) peut être reliée à un corps principal (3) de la partie (1) située du côté formant manchon, moyennant la formation de surfaces de serrage (4, 5), perpendiculaires à l'axe du dispositif d'enfichage, entre le corps de guidage et le corps principal (2, 3) et il est prévu une bague de butée (6) pouvant être insérée entre les surfaces de serrage (4, 5) et dont l'ouverture (7) possède un diamètre inférieur au diamètre extérieur de la section de guidage (8) de la partie (9) située du côté formant broche, caractérisé par le fait que la section de guidage (8) comporte un épaulement annulaire (10) réglé sur l'ouverture (7) de la bague de butée (6) et qu'il est prévu aussi bien un premier corps principal (3), qui est réalisé sous la forme d'un organe (3a) de guidage d'un guide d'ondes optiques et dont la liaison avec le corps de guidage (2) s'effectue moyennant l'enlèvement de la bague d'arrêt (6), qu'un second corps principal pouvant être permuté avec le premier corps principal et qui est réalisé sous la forme d'un corps (3b) formant socle pour un composant électro-optique (11) et dont la liaison avec le corps de guidage (2) est réalisée moyennant l'insertion de la bague d'arrêt (6).

2. Dispositif d'enfichage pour guides d'ondes optiques suivant la revendication 1, caractérisé par le fait que le corps de guidage (2) en forme de douille est réalisé de manière à pouvoir être vissé par un embout taraudé (12), tourné à l'opposé de la partie (9) située sur le côté formant broche, sur le corps principal (3).

3. Dispositif d'enfichage pour guides d'ondes optiques suivant l'une des revendications 1 ou 2, caractérisé par le fait qu'un organe cylindrique (13) de guidage d'un guide d'ondes optiques, qui constitue la section de guidage (8), de la partie (9) située du côté formant broche est monté dans une douille extérieure (14) de manière à pouvoir se déplacer suivant la direction d'enfichage.

4. Dispositif d'enfichage pour guides d'ondes optiques suivant la revendication 3, caractérisé par le fait que l'organe (13) de guidage d'un guide d'ondes optiques est en appui suivant la direction d'enfichage contre une butée (16) de la douille extérieure (14), au moyen d'un collet (15) prévu transversalement par rapport à la direction d'enfichage.

5. Dispositif d'enfichage pour guides d'ondes optiques suivant la revendication 4, caractérisé par le fait qu'un ressort hélicoïdal de pression (18), qui entoure l'organe (13) de guidage d'un guide d'ondes optiques de la partie (9) située du côté formant broche, est en appui entre le collet (15) et une surface d'extrémité (17) de la douille extérieure (14).

6. Dispositif d'enfichage pour guides d'ondes optiques suivant la revendication 5, caractérisé par le fait que la surface d'extrémité (17) est formée par un écrou annulaire (19) pouvant être vissé dans la douille extérieure (14).

7. Dispositif d'enfichage pour guides d'ondes optiques suivant la revendication 6, caractérisé par le fait que l'écrou annulaire (19) posséde un diamètre intérieur inférieur au diamètre extérieur du collet (15) de l'organe (13) de guidage d'un guide d'ondes optiques de la partie (9) en forme de broche.

8. Dispositif d'enfichage pour guides d'ondes optiques suivant la revendication 7, caractérisé par le fait que l'organe (13) de guidage d'un guide d'ondes optiques de la partie (9) située du côté formant broche est vissé sur une douille d'extrémité (20), dans la zone de la douille extérieure (14).

9. Dispositif d'enfichage pour guides d'ondes optiques suivant la revendication 8, caractérisé par le fait que la douille d'extrémité (20) comporte un collet annulaire (21) possédant un diamètre extérieur supérieur au diamètre intérieur de l'écrou annulaire (19) prévu à l'extérieur de la douille extérieure (14).

10. Dispositif d'enfichage pour guides d'ondes optiques suivant la revendication 9, caractérisé par le fait que la douille d'extrémité (20) sur le côté du collet annulaire (22), qui est tourné à l'opposé de la partie (1) située du côté formant manchon, est réalisée sous la forme d'une douille crimp (12).

11. Dispositif d'enfichage de guides d'ondes optiques suivant la revendication 10, caractérisé par le fait qu'il est prévu une douille antagoniste (23) pouvant être insérée dans la zone de la douille crimp (22).

12. Dispositif d'enfichage pour guides d'ondes optiques suivant la revendication 11, caractérisé par le fait que la distance de la douille extérieure (14), au niveau de son extrémité (24) tournée vers la partie (1) située du côté formant manchon, par rapport à la section de guidage, forme une fente de logement (25) pour une zone d'extrémité (26) du corps de guidage (2).

FIG 1

16  15  18  34  17  19  21

24  25  36  14  9

31  8

30

10  27  13  20  23  22

0 092 217

FIG 2

36  3  1  4  2  26

33  28

3a  32  12  5

## FIG 3